# EUROPEAN PATENT SPECIFICATION

(11) **EP 3 272 411 B1**
(45) Date of publication and mention of the grant of the patent: **17.06.2020**
(21) Application number: 16764571.2
(22) Date of filing: 05.02.2016
(51) Int. Cl.: B01D 53/48, B01D 53/18, B01D 53/78, B01D 53/92, B63H 21/32

(54) **EXHAUST GAS TREATMENT APPARATUS**
ABGASBEHANDLUNGSVORRICHTUNG
APPAREIL DE TRAITEMENT DE GAZ D'ÉCHAPPEMENT

(30) Priority: 16.03.2015 JP 2015052201
(43) Date of publication of application: 24.01.2018
(73) Proprietor: Fuji Electric Co., Ltd., Kawasaki-shi Kanagawa 210-9530 (JP)
(72) Inventor: TAKAHASHI, Kuniyuki, Kawasaki-shi, Kanagawa 210-9530 (JP); ENAMI, Yoshiaki, Kawasaki-shi, Kanagawa 210-9530 (JP); ENOMOTO, Joe, Kawasaki-shi, Kanagawa 210-9530 (JP)
(74) Representative: MERH-IP Matias Erny Reichl Hoffmann Patentanwälte PartG mbB
(86) International application number: PCT/JP2016/053578
(87) International publication number: WO 2016/147740

(56) References cited:
- WO-A1-2014/171366
- CN-Y- 201 287 024
- JP-A- H1 142 420
- JP-A- S6 186 922
- JP-A- H08 126 812
- JP-A- H11 207 143
- JP-A- 2001 505 824
- JP-A- 2012 213 737
- JP-U- H0 173 329
- KR-B1- 101 480 683

## Description

### BACKGROUND

### 1. TECHNICAL FIELD

The present invention relates to an exhaust gas treatment apparatus.

### 2. RELATED ART

Conventionally, an exhaust gas treatment apparatus which removes harmful components in an exhaust gas by passing the exhaust gas from the bottom to the top of a cylindrical absorption tower which sprays seawater or the like inside is known (refer to Patent Documents). Inside the absorption tower, by moving the exhaust gas to the top while swirling spirally, the time for the exhaust gas to contact with seawater or the like is lengthened.

### [Patent Document]

Patent Document 1: Japanese Patent Application Publication No. H6-190240
Patent Document 2: Japanese Patent Application Publication No. H8-281055
Patent Document 3: Japanese Patent No. 3073972
Patent Document 4: Japanese Utility Model Registration No. 3160792
Patent Document 5: U.S. Patent No. 2013-0213231
Patent Document 6: Japanese Patent Application Publication No. 2009-240908 Another absorption process for flue gases is disclosed in CN201287024Y.

As a generation source of an exhaust gas, main engines for ship propulsion, auxiliary engines for power generation, boilers for supplying steam or the like can be considered.
These instruments do not generate a constant exhaust gas, but an exhaust gas amount varies depending on load of engines or the like.

The exhaust gas is swirled spirally by being introduced along a wall surface of a cylindrical absorbing unit. However, when an exhaust gas amount becomes smaller, then a speed at which the exhaust gas is introduced into the absorption tower becomes smaller and the exhaust gas cannot be swirled sufficiently. For this reason, harmful substances cannot be absorbed efficiently.

### SUMMARY

In an aspect of the present invention, an exhaust gas treatment apparatus is provided according to claim 1. The exhaust gas treatment apparatus comprises a reaction tower and two or more exhaust gas introducing pipes. The reaction tower has two or more openings through which an exhaust gas is introduced. The two or more exhaust gas introducing pipes are provided corresponding to the two or more openings. The two or more exhaust gas introducing pipes may carry the exhaust gas. In the two or more openings, an opening area which contributes to introducing the exhaust gas into the reaction tower is variable.

The exhaust gas introducing pipe is connected to the two or more openings so that the introduced exhaust gas swirls inside the reaction tower.

The exhaust gas treatment apparatus further comprises an opening controlling unit. The opening controlling unit controls the opening area depending on a flow rate of the exhaust gas which is introduced into the reaction tower.

The opening controlling unit may control the opening area so as to become smaller with decrease in a flow rate of the exhaust gas which is introduced into the reaction tower.

The reaction tower has two or more openings with different areas. The respective exhaust gas introducing pipes corresponding to the two or more openings with different areas have a selecting unit. The selecting unit may select whether to introduce the exhaust gas into the reaction tower or not.

The two or more openings are provided respectively at different positions in a height direction. The height direction is a direction from the bottom side where the exhaust gas is introduced to the top side where the exhaust gas is emitted in the reaction tower. An opening area of an opening which is arranged on the bottom side of the reaction tower is larger than an opening area of an opening which is arranged on the top side of the reaction tower.

The two or more exhaust gas introducing pipes may be provided to overlap in the top surface view.

A cross-sectional area of the top side of the reaction tower may be smaller than a cross-sectional area of the bottom side.

The two or more exhaust gas introducing pipes may be collected to a common exhaust gas introducing pipe before being introduced into the reaction tower, branched again on a downstream side and connected to the corresponding openings. The exhaust gas treatment apparatus may further comprise a main gas source closing off unit. The main gas source closing off unit may be provided on an upstream side of the common exhaust gas introducing pipe in at least the one exhaust gas introducing pipe of the two or more exhaust gas introducing pipes, and switch whether to connect the exhaust gas introducing pipe to the common exhaust gas introducing pipe or not.

At least one of the openings may have a variable opening area.

At least the one exhaust gas introducing pipe may have a variable cross-sectional area in the vicinity of the opening.

The reaction tower has a cylindrical shape which extends in a height direction. A horizontal cross section which is perpendicular to the height direction of the reaction tower may be a circular shape. The two or more exhaust gas introducing pipes connect in a tangential direction of the horizontal cross section which is a circular shape.

The exhaust gas treatment apparatus further comprises a flow controlling unit. The flow controlling unit may control a supply amount of a liquid which is supplied to an inner part of the reaction tower for treating the exhaust gas depending on an opening area which contributes to introducing the exhaust gas into the reaction tower.

The exhaust gas treatment apparatus may further comprise a trunk tube, and a plurality of liquid introducing pipes. The trunk tube may be provided inside the reaction tower. In the trunk tube, a liquid may pass in the height direction of the reaction tower. The plurality of liquid introducing pipes may supply a liquid to the trunk tube at different positions in the height direction. The flow controlling unit may control a supply amount of a liquid to the reaction tower by selecting the plurality of liquid introducing pipes.

The flow controlling unit may control a supply amount of the liquid so that a supply amount of the liquid which is supplied inside the reaction tower becomes smaller with decrease in the opening area.

The reaction tower may have a first part and a second part. The first part may have an opening through which the exhaust gas is introduced. The second part may be provided outside the first part. The second part may have an opening through which the exhaust gas is introduced. The second part may have a larger diameter than the first part. A space to which the exhaust gas is introduced in the first part and the second part may be connected. The opening which is provided on the first part may be smaller than the opening which is provided on the second part.

### BRIEF DESCRIPTION OF THE DRAWINGS

Fig. 1 is a diagram showing an exemplary structure of an exhaust gas treatment apparatus 100 according to the embodiment.
[Fig. 2] Fig. 2 (a) is a diagram showing one example of an opening 12 on the side surface of a reaction tower 10. Fig. 2 (b) is a diagram showing one example of a reaction tower 10 and an exhaust gas introducing pipe 20 when viewed from the top direction of the reaction tower 10.
[Fig. 3A] Fig. 3A (a) is a diagram showing another example of the opening 12 on the side surface of the reaction tower 10. Fig. 3A (b) is a diagram showing another example of the reaction tower 10 and the exhaust gas introducing pipe 20 when viewed from the top direction of the reaction tower 10.
[Fig. 3B] Fig. 3B (a) is a diagram showing another example of the opening 12 on the side surface of the reaction tower 10. Fig. 3B (b) is a diagram showing another example of the reaction tower 10 and the exhaust gas introducing pipe 20 when viewed from the top direction of the reaction towers 10.
Fig. 4 is a diagram showing one example of an exhaust gas introducing pipe 20 whose opening area is variable.
Fig. 5 is a diagram showing another configurational example of an exhaust gas treatment apparatus 100.
Fig. 6 is a diagram showing another configurational example of an exhaust gas treatment apparatus 100.
Fig. 7 is a diagram showing another configurational example of an exhaust gas treatment apparatus 100.
Fig. 8 is a diagram showing a configurational example of a reaction tower 10, a liquid introducing pipe 30 and an exhaust gas introducing pipe 20.
Fig. 9 is a diagram showing another configurational example of a reaction tower 10. Fig. 10 is a diagram showing another configurational example of a reaction tower 10, a trunk tube 14 and an exhaust gas introducing pipe 20.
Fig. 11 is a diagram showing one example of a reaction tower 10 of an exhaust gas treatment apparatus 100 which is arranged in a ship.

### DESCRIPTION OF EXEMPLARY EMBODIMENTS

Hereinafter, the present invention is described through the embodiments of the invention. The invention is limited by the claims.

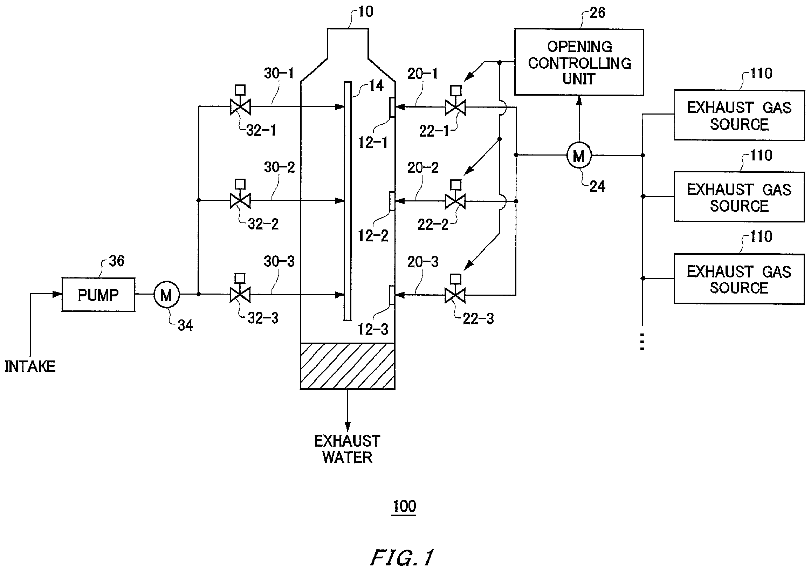

Fig. 1 is a diagram showing an exemplary structure of an exhaust gas treatment apparatus 100 according to the embodiment. The exhaust gas treatment apparatus 100 removes a harmful substances such as a sulfur component which is included in an exhaust gas which is emitted from one or more exhaust gas sources 110 which are ship engines or the like. The exhaust gas treatment apparatus 100 of the present example comprises a reaction tower 10, one or more exhaust gas introducing pipes 20, one or more valves 22, an opening controlling unit 26, a gas flow measuring unit 24, one or more liquid introducing pipes 30, one or more valves 32, a liquid flow measuring unit 34 and a pump 36.

The one or more exhaust gas introducing pipes 20 carry an exhaust gas which is emitted by the exhaust gas source 110 to the reaction tower 10. The reaction tower 10 has one or more openings 12 on the side surface. End portions of respective exhaust gas introducing pipes 20 are connected to corresponding openings 12. The respective exhaust gas introducing pipes 20 are connected to the reaction tower 10 so that an introduced exhaust gas may be spirally swirled inside the reaction tower 10.

The reaction tower 10 has an inner space which extends in a height direction. The height direction is, for example, a direction perpendicular to a ground or a water surface. An exhaust gas is introduced from a bottom side in the height direction of the reaction tower 10, and the exhaust gas is emitted from the top side in the height direction. In an inner space of the reaction tower 10 of the present example, a trunk tube 14 for injecting a liquid is provided.

The trunk tube 14 is provided extending in the height direction in an inner part of the reaction tower 10, and carries a liquid for injecting in the height direction. The trunk tube 14 injects a liquid at a plurality of height positions. The trunk tube 14 may have a branch pipe which extends in a horizontal direction which is orthogonal to the height direction and injects a liquid. A valve 22 is provided in respective exhaust gas introducing pipes 20, and functions as a selecting unit which selects whether to close corresponding exhaust gas introducing pipes 20 or not.

The one or more openings 12 are provided so that a total opening area which contributes to introducing the exhaust gas into the reaction tower 10 may be variable. For example, in an example of Fig. 1, three openings 12 are provided in the reaction tower 10, and an opening 12 which contributes to introducing the exhaust gas by a valve 22 is selectable. Thereby, a total opening area which contributes to introducing the exhaust gas into the reaction tower 10 becomes variable.

In another example, one or more openings 12 whose opening areas are variable may be provided in the reaction tower 10. For example, an opening 12 can make the opening on the side surface of the reaction tower 10 variable by a mechanism such as a shutter.

The one or more exhaust gas sources 110 vary an exhaust gas amount which is emitted depending on a demanded load or the like. When there is particularly no definition in the specification, an exhaust gas amount refers to a value per unit time. Also, a flow rate of a liquid described below refers to, when there is particularly no definition, a value per unit time. In response to the above, because an opening area of the reaction tower 10 of the present example is variable, an opening area depending on an exhaust gas amount can be selected.

In general, by making an opening area (or a cross-sectional area of the exhaust gas introducing pipe 20) smaller, the speed of the exhaust gas which is introduced through the opening improves. For this reason, even when an exhaust gas amount is small, by controlling the opening area small, a flow velocity of the exhaust gas which is introduced into the reaction tower 10 can be maintained more than or equal to a predetermined value. For this reason, the exhaust gas can be swirled sufficiently in the reaction tower 10, and harmful substances which are included in the exhaust gas can be removed efficiently. Accordingly, an apparatus scale can be made smaller.

If a emit regulation of harmful substances are strengthened in a ship or the like, it can be considered to newly install an exhaust gas treatment apparatus, or to replace an exhaust gas treatment apparatus on equipment such as an existing ship. Because it is easy to make the exhaust gas treatment apparatus 100 of the present example smaller, it becomes easy to arrange an exhaust gas treatment apparatus on equipment such as an existing ship.

The opening controlling unit 26 controls an opening area depending on a flow rate of an exhaust gas which is introduced into the reaction tower 10. The opening controlling unit 26 of the present example controls an opening area which contributes to introducing the exhaust gas into the reaction tower 10 by controlling valves 22 which are provided in respective exhaust gas introducing pipes 20. The opening controlling unit 26 may control the opening area so as to become smaller with decrease in the flow rate of the exhaust gas. The opening controlling unit 26 may measure an exhaust gas flow rate directly by a gas flow measuring unit 24, or may estimate an exhaust gas flow rate based on operation control information or the like of respective exhaust gas sources 110. The operation control information includes, for example, a drive rate which controls how much load to a rating with which the exhaust gas source 110 is operated or the like.

The pump 36 obtains a liquid for supplying to an inner part of the reaction tower 10. If the exhaust gas treatment apparatus 100 is provided in a ship, the pump 36 may draw up seawater, lake water, or river water or the like. The one or more liquid introducing pipes 30 carry the liquid which is drawn up by the pump 36, and supply to the trunk tube 14 inside the reaction tower 10. The valve 32 is provided in respective liquid introducing pipes 30, and controls whether to close corresponding liquid introducing pipes 30 or not. The liquid flow measuring unit 34 measures a flow rate of a liquid which the pump 36 outputs.

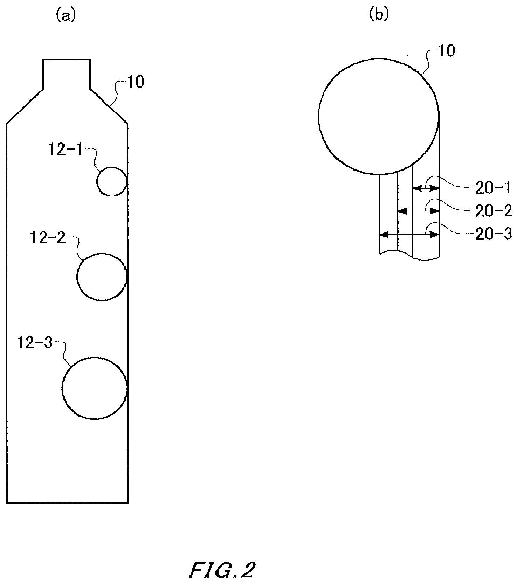

Fig. 2 (a) is a diagram showing one example of an opening 12 on the side surface of a reaction tower 10. Fig. 2 (b) is a diagram showing one example of a reaction tower 10 and an exhaust gas introducing pipe 20 when viewed from the top direction of the reaction tower 10. In the present example, a plurality of openings 12 is provided at different positions in a height direction.
Intervals of the openings 12 in the height direction may be the same. Intervals of the openings 12 may be intervals of center points of the openings 12.

Also, areas of the respective openings 12 may be different. The opening 12 of the present example may have a smaller area the closer it is to the top side where an exhaust gas is emitted from the reaction tower 10. Areas of adjacent openings 12 may differ about 2 times to 10 times, or differ more than or equal to 10 times. In the present example, to an area of an opening 12-3 which is farthest on the bottom side, an area of an adjacent opening 12-2 may be about 10-20%. Also, to an area of an opening 12-3 which is farthest on the bottom side, an area of an opening 12-1 which is farthest on the top side may be about 1-10%. The opening controlling unit 26 may select one exhaust gas introducing pipe 20, or may select two or more exhaust gas introducing pipes 20 depending on an exhaust gas amount.

Also, the opening controlling unit 26 may preliminarily select a corresponding opening 12 and exhaust gas introducing pipe 20 to exhaust gas sources 110 with different exhaust gas flow rates.
For example, the opening controlling unit 26 may select an opening 12-3 which is farthest on the bottom side for the exhaust gas source 110 which is a main engine for propulsion of a ship with a big exhaust gas flow rate, and the exhaust gas treatment apparatus 100 may treat from about 100% to 20% of a rated flow of the exhaust gas. Also, the opening controlling unit 26 may select an opening 12-2 for the exhaust gas source 110 which is an auxiliary engine for power generation with a relatively small exhaust gas flow rate, and the exhaust gas treatment apparatus 100 may treat from about 20% to 10% of the rated flow of the exhaust gas. Also, the opening controlling unit 26 may select an opening 12-1 which is farthest on the top side for the exhaust gas source 110 which is a boiler with a further smaller exhaust gas flow rate than the auxiliary engine for power generation, and the exhaust gas treatment apparatus 100 may treat from about 10% to 1% of the rated flow of the exhaust gas.

Also, as shown in Fig. 2 (b), an exhaust gas introducing pipe 20 is provided linearly in the vicinity of a connecting portion which connects to the reaction tower 10. However, a side wall outside the exhaust gas introducing pipe 20 extends in a tangential direction of a contour of the reaction tower 10. Also, a side wall inside the exhaust gas introducing pipe 20 is provided so as to extend in a direction which intersects a contour of the reaction tower 10. Thereby, the exhaust gas can be introduced along an inner wall of the reaction tower 10 and be swirled spirally.

Respective exhaust gas introducing pipes 20 may be provided to overlap in the top surface view shown in Fig. 2 (b). Thereby, radially spreading of exhaust gas introducing pipes 20 can be prevented. The exhaust gas treatment apparatus 100 of the present example is suitable to the case when there is no margin for an arrangement area in a horizontal direction in a ship or the like in which an exhaust gas treatment apparatus 100 is arranged.

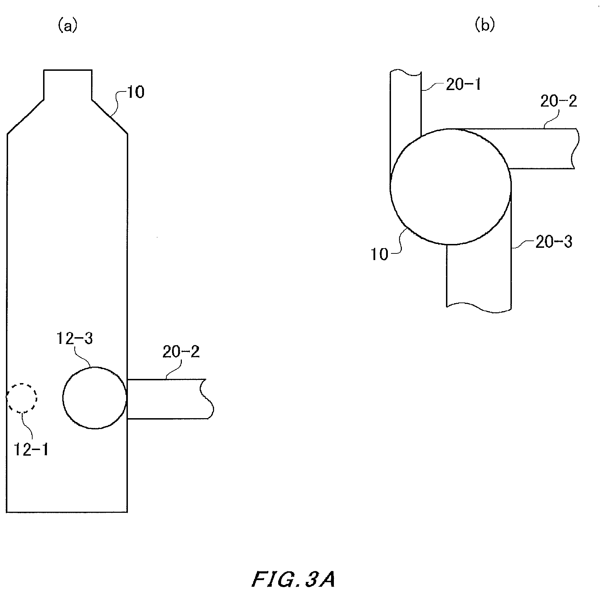

Fig. 3A (a) is a diagram showing another example of the opening 12 on the side surface of the reaction tower 10. Fig. 3A (b) is a diagram showing another example of the reaction tower 10 and the exhaust gas introducing pipe 20 when viewed from the top direction of the reaction tower 10. In the present example, a plurality of openings 12 is provided at a predetermined interval in a circumferential direction of the side surface of the reaction tower 10 at the same height position.
The plurality of openings 12 is provided on the bottom side of the reaction tower 10. Intervals of the openings 12 in the circumferential direction may be the same. Intervals of the openings 12 may be intervals of center points of the openings 12.

Also, areas of the respective openings 12 may be different. Areas of respective openings 12 may differ about 2 times to 10 times, or differ more than or equal to 10 times. In the present example, to an area of a largest opening 12-3, an area of a next largest opening 12-2 may be about 10%. Also, to an area of a largest opening 12-3, an area of a smallest opening 12-1 may be about 1%.

Also, as shown in Fig. 3A (b), respective exhaust gas introducing pipes 20 are provided linearly in the vicinity of a connecting portion which connects to the reaction tower 10. However, a side wall outside the exhaust gas introducing pipe 20 extends in a tangential direction of a contour of the reaction tower 10. Also, a side wall inside the exhaust gas introducing pipe 20 is provided so as to extend in a direction which intersects a contour of the reaction tower 10. Thereby, an exhaust gas can be introduced along an inner wall of the reaction tower 10 and be swirled spirally.

Respective exhaust gas introducing pipes 20 are provided at the same height position, as shown in Fig. 3A (a). The exhaust gas treatment apparatus 100 of the present example is suitable to the case when there is no margin for an arrangement area in the top side of the reaction tower 10 in a ship or the like in which an exhaust gas treatment apparatus 100 is arranged.

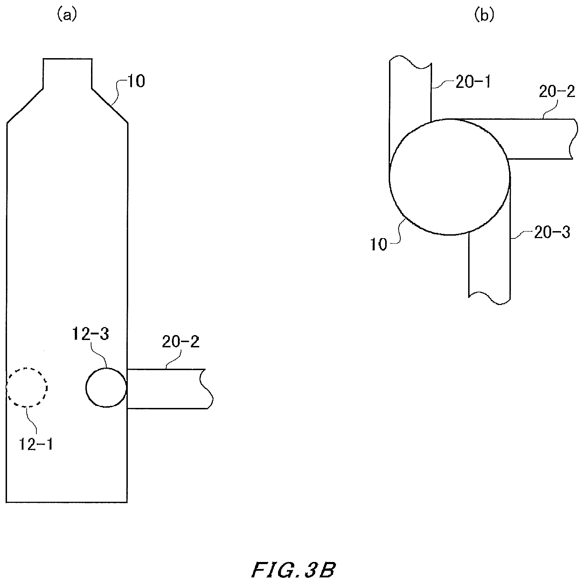

Fig. 3B (a) is a diagram showing another example of the opening 12 on the side surface of the reaction tower 10. Fig. 3B (b) is a diagram showing another example of the reaction tower 10 and the exhaust gas introducing pipe 20 when viewed from the top direction of the reaction towers 10. The reaction tower 10 of the present example is different from the reaction tower 10 shown in Fig. 3A in that areas of respective openings 12 are the same and cross-sectional areas of respective exhaust gas introducing pipes 20 are the same. Another configuration may be the same as the reaction tower 10 shown in Fig. 3A.

In the present example, when a flow rate of an exhaust gas is large, by distributing the exhaust gas to three openings 12 and introducing into the reaction tower 10, an introducing efficiency of the exhaust gas can be increased. When a flow rate of an exhaust gas is small, by decreasing the number of openings 12 used for introducing an exhaust gas (for example, using only one opening 12), a flow velocity of the exhaust gas which is introduced into the reaction tower 10 can be maintained more than or equal to a predetermined value.

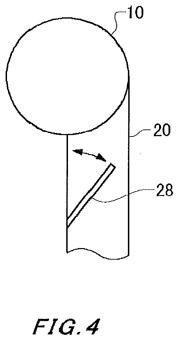

Fig. 4 is a diagram showing one example of an exhaust gas introducing pipe 20 whose opening area is variable. The exhaust gas introducing pipe 20 of the present example has a movable part 28. The movable part 28 varies a cross-sectional area of a flow path in which a gas flows inside the exhaust gas introducing pipe 20 in the vicinity of the reaction tower 10.
The movable part 28, for example, controls a cross-sectional area of a gas flow path by closing off a portion of the gas flow path in the exhaust gas introducing pipe 20. The exhaust gas treatment apparatus 100 may comprise one or more exhaust gas introducing pipes 20 whose cross-sectional areas are variable.

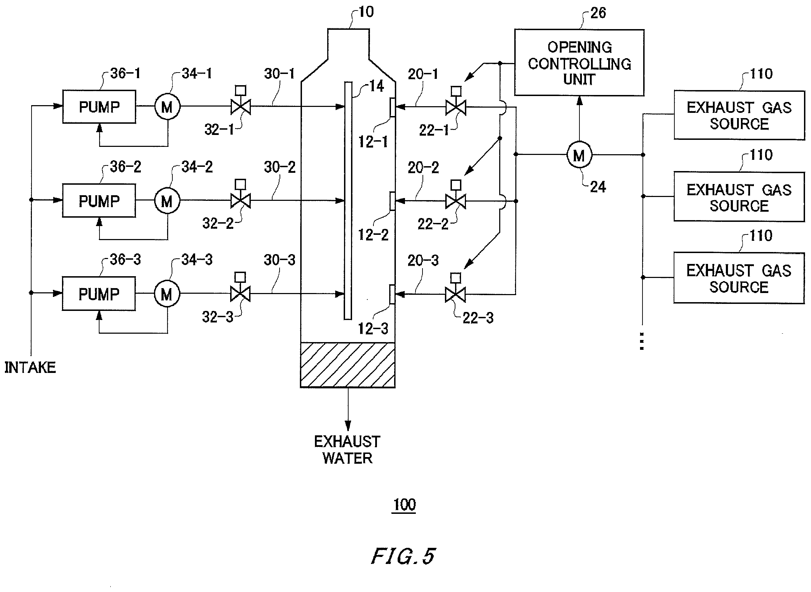

Fig. 5 is a diagram showing another configurational example of an exhaust gas treatment apparatus 100. The exhaust gas treatment apparatus 100 of the present example is different from the exhaust gas treatment apparatus 100 shown in Fig. 1 in that it respectively comprises a plurality of pumps 36 and liquid flow measuring units 34. Another configuration may be the same as the exhaust gas treatment apparatus 100 described in association with Fig. 1.

The pumps 36 and the liquid flow measuring units 34 are provided for each liquid introducing pipe 30. The respective pumps 36 supply a liquid which is drawn up from an intake to corresponding liquid introducing pipes 30. The respective liquid flow measuring units 34 measure flow rates of a liquid which corresponding pumps 36 emit. The pumps 36 may operate so that a flow rate measured by corresponding liquid flow measuring units 34 may be a predetermined flow rate.

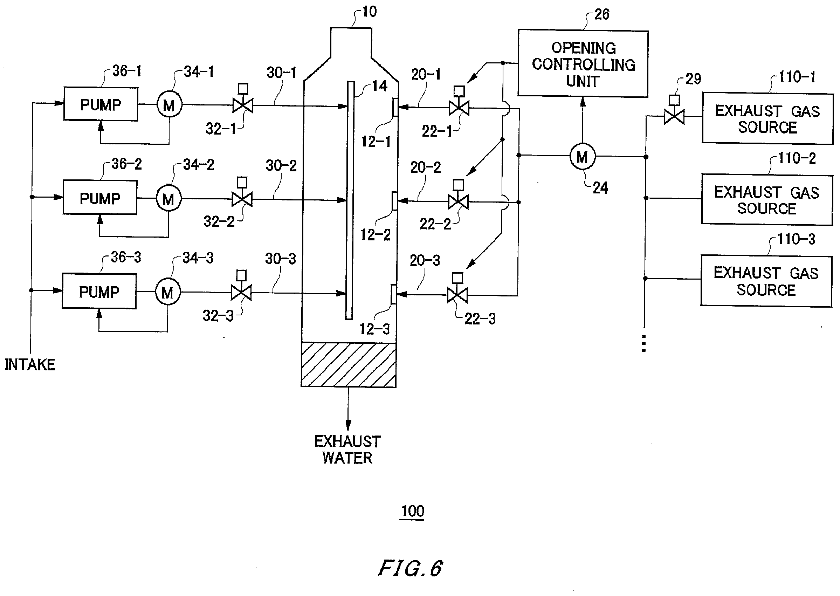

Fig. 6 is a diagram showing another configurational example of an exhaust gas treatment apparatus 100. The exhaust gas treatment apparatus 100 of the present example is different from respective exhaust gas treatment apparatus 100 described in association with Fig. 1 to Fig. 5 in that it further comprises a main gas source closing off unit 29. Another configuration may be the same as either of the exhaust gas treatment apparatuses 100 described in association with Fig. 1 to Fig. 5.
Fig. 6 shows a configuration in which the main gas source closing off unit 29 is added to the exhaust gas treatment apparatus 100 shown in Fig. 5.

The main gas source closing off unit 29 is provided corresponding to an exhaust gas source 110-1 which has the largest exhaust gas amount among a plurality of exhaust gas sources 110. Here, the largest exhaust gas amount may refer to the fact that an exhaust gas amount in rated operation is the largest. The main gas source closing off unit 29 may be provided for an engine for propulsion of a ship.

An exhaust gas of a plurality of exhaust gas sources 110 is once collected in a common exhaust gas introducing pipe. That is, a plurality of exhaust gas introducing pipes 20 which is connected to a plurality of exhaust gas sources 110 is, after being once collected in a common exhaust gas introducing pipe, branched again on a downstream side and connected to corresponding openings 12. The main gas source closing off unit 29 switches whether to connect the exhaust gas source 110-1 to the common exhaust gas introducing pipe or not. The main gas source closing off unit 29 of the present example is provided to an exhaust gas introducing pipe 20-1 which connects the exhaust gas source 110-1 and the common exhaust gas introducing pipe. That is, the main gas source closing off unit 29 is provided on an upstream side of the common exhaust gas introducing pipe in the exhaust gas introducing pipe 20-1.

The main gas source closing off unit 29 closes an exhaust gas source 110-1 off the common exhaust gas introducing pipe, for example when the exhaust gas source 110-1 does not operate. Thereby, flowing of an exhaust gas of other exhaust gas sources 110 into an important exhaust gas source 110-1 is prevented. A closing off unit may be provided for respective exhaust gas sources 110.

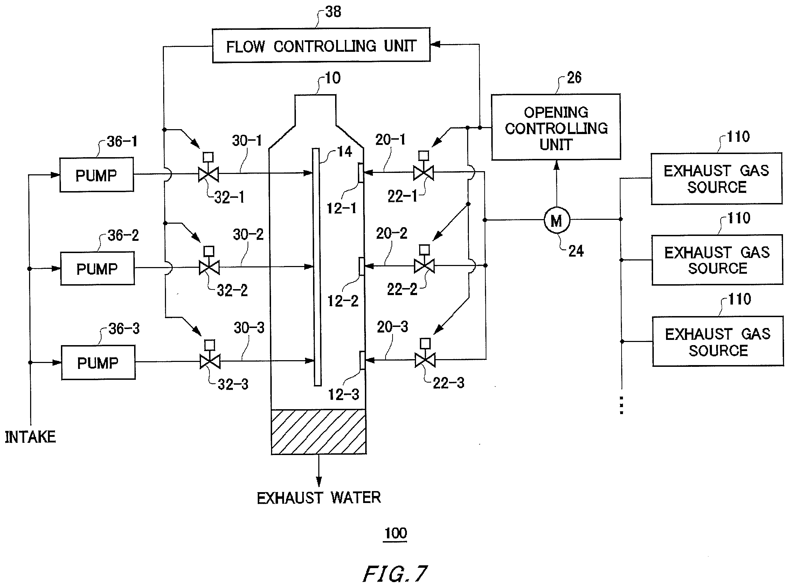

Fig. 7 is a diagram showing another configurational example of an exhaust gas treatment apparatus 100. The exhaust gas treatment apparatus 100 of the present example is different from respective exhaust gas treatment apparatuses 100 described in association with Fig. 1 to Fig. 6 in that it further comprises a flow controlling unit 38. Another configuration may be the same as either of the exhaust gas treatment apparatuses 100 described in association with Fig. 1 to Fig. 6. In Fig. 7, a liquid flow measuring unit 34 is omitted, but the exhaust gas treatment apparatus 100 of the present example may also have a liquid flow measuring unit 34.

The flow controlling unit 38 controls a supply amount of a liquid which is supplied for treating an exhaust gas to an inner part of the reaction tower 10 depending on an opening area which contributes to introducing the exhaust gas into the reaction tower 10. The flow controlling unit 38 of the present example controls a supply amount of a liquid based on a control signal which the opening controlling unit 26 outputs for controlling an opening area. In another example, the flow controlling unit 38 may control a supply amount of a liquid based on an exhaust gas amount of a plurality of exhaust gas sources 110.

Specifically, if a harmful substance concentration in an exhaust gas is constant, the flow controlling unit 38 decreases an amount of a liquid which is supplied to the reaction tower 10 with decrease in the opening area (that is, with decrease in the exhaust gas amount). Because an amount of harmful substances decreases with decrease in the exhaust gas amount, a liquid amount for absorbing the harmful substances may become less. By controlling the liquid amount appropriately, energy which is consumed at pumps 36 or the like can be reduced. The harmful substance concentration in the exhaust gas is determined mainly by a harmful substance concentration included in a fuel, a fuel consumption amount, and an air ratio at the time of fuel combustion.

The flow controlling unit 38 of the present example controls a supply amount of a liquid by selecting a liquid introducing pipe 30 which supplies a liquid to the reaction tower 10 among a plurality of liquid introducing pipes 30. The flow controlling unit 38 may select a valve 32 corresponding to the opening 12 which the opening controlling unit 26 selects and other valve(s) 32 which is(are) on the top side of the valve 32.

For example, when introducing an exhaust gas into the reaction tower 10 only from an opening 12-3, the flow controlling unit 38 selects valves 32-1, 32-2 and 32-3, and supplies a liquid to liquid introducing pipes 30-1, 30-2 and 30-3. When introducing an exhaust gas into the reaction tower 10 only from an opening 12-2, it selects valves 32-1 and 32-2, and supplies a liquid to liquid introducing pipes 30-1 and 30-2. When introducing an exhaust gas into the reaction tower 10 only from an opening 12-1, it selects valves 32-1 and supplies a liquid to a liquid introducing pipe 30-1. Also, respective liquid introducing pipes 30 may have different cross-sectional areas of liquid flow paths inside. For example, a liquid introducing pipe 30-1 which is connected to the top side of the reaction tower 10 may have a smaller cross-sectional area of a liquid flow path than those of a liquid introducing pipe 30-2 and a liquid introducing pipe 30-3 which are connected farther to the bottom side. Also, a liquid introducing pipe 30-3 which is connected to the bottom side of the reaction tower 10 may have a larger cross-sectional area of a liquid flow path than that of a liquid introducing pipe 30-2 which is connected farther to the top side.

The flow controlling unit 38 may always select a liquid introducing pipe 30-1 farthest on the top side regardless of an area of an opening 12 (that is, an exhaust gas amount). A liquid introducing pipe 30 farther on the bottom side may be additionally selected with increase in the exhaust gas amount. In another example, the flow controlling unit 38 may control a flow rate of a liquid which is emitted by respective pumps 36.

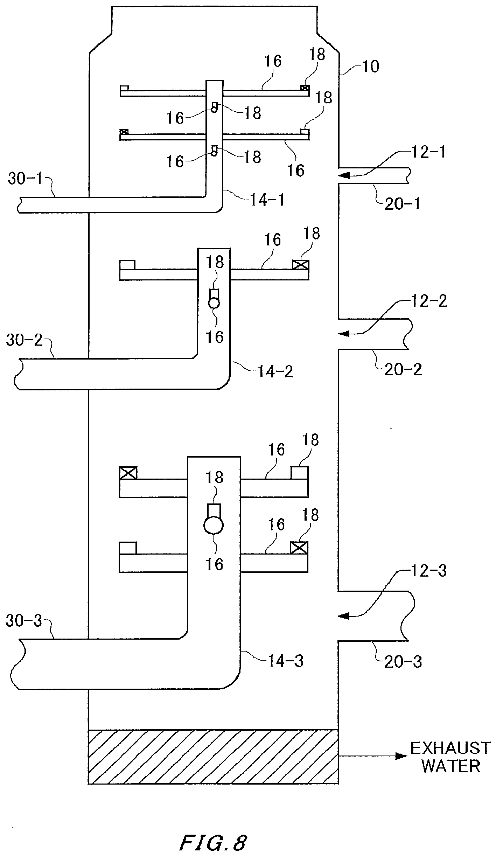

Fig. 8 is a diagram showing a configurational example of a reaction tower 10, a liquid introducing pipe 30 and an exhaust gas introducing pipe 20. The reaction tower 10 has a trunk tube 14 divided into a plurality in a height direction. In the present example, it has a top trunk tube 14-1, an intermediate trunk tube 14-2 and a bottom trunk tube 14-3 which are sequentially arranged from the top side of the reaction tower 10. Respective trunk tubes 14 carry a liquid which is introduced from corresponding liquid introducing pipes 30 to the height direction of the reaction tower.

In the respective trunk tubes 14, one or more branch pipes 16 are provided. Respective branch pipes 16 are provided extending from outer side surfaces of the trunk tubes 14 towards an inner side surface of the reaction tower 10. The branch pipe 16 is, for example, provided extending to a direction which is perpendicular to the height direction of the reaction tower 10.

Inside the respective branch pipes 16, a flow path in which a liquid flows branched from the trunk tube 14 is formed. Also, the respective branch pipes 16 have a injecting unit 18 which receives a liquid from the flow path and injects the liquid to an inner space of the reaction tower 10.
The injecting unit 18 may jet the liquid in the state of mist. Also, the respective branch pipes 16 may have a plurality of injecting units 18.

Also, the injecting unit 18 may jet the liquid towards a direction which is perpendicular to the height direction of the reaction tower 10. In Fig. 8, an injection port may be provided on a surface of the injecting unit 18 denoted by an X mark. In the present example, branch pipes 16 extend so as to be faced through the trunk tube 14 with each other. Each injecting unit 18 which is provided on an opposing branch pipe 16 injects a liquid in a opposite direction.

A liquid which is injected from the injecting unit 18 contacts with an exhaust gas which passes through inside the reaction tower 10 and absorbs harmful substances included in the exhaust gas. The liquid used for absorbing the harmful substances is accumulated at the bottom of the reaction tower 10 and is emitted outside.

In the reaction tower 10 of the present example, a plurality of openings 12 is provided at different positions in a height direction.
An opening 12-1 farthest on the top side has a smallest area, and an opening 12-3 farthest on the bottom side has a largest opening area. The opening controlling unit 26 may select one opening 12 depending on an exhaust gas amount. Accordingly, with decrease in the exhaust gas amount, the more the exhaust gas is introduced from the top side of the reaction tower 10.

The respective trunk tubes 14 are provided corresponding to the respective openings 12.
Branch pipes 16 that extend from the respective trunk tubes 14 are provided at the same position or the higher position in a height direction to the corresponding openings 12.

Because an amount of impurities included in the exhaust gas decreases farther on the top side of the reaction tower 10, a trunk tube 14 farther on the top side may have a smaller flow rate of a liquid to carry. Thereby, excessive usage of a liquid can be prevented. Also, a trunk tube 14 farther on the top side may have a smaller cross-sectional area of a liquid flow path. Thereby, decrease in a liquid pressure accompanying decrease in a liquid flow rate can be made small, and decrease in a jetting speed of a liquid can be prevented.

Also, a grain size of a liquid which is injected by an injecting unit 18 provided on the bottom side of the reaction tower 10 is preferably larger than a grain size of a liquid which is injected by an injecting unit 18 arranged on the top side. That is, a grain size of a liquid becomes smaller farther on the top side of the reaction tower 10. A grain number of a liquid injected per unit volume may be larger on the top side of the reaction tower 10 than on the bottom side of the reaction tower 10.

Because a concentration of harmful substances included per unit volume becomes low on the top of the reaction tower 10, harmful substances can be absorbed more efficiently by arranging much liquid with a small grain size in a dispersion state than by arranging a liquid with a big grain size sparsely. The liquid absorbs harmful substances in the vicinity of the liquid.

When the concentration of harmful substances is high, even though a liquid with a big grain size is arranged sparsely, harmful substances in the vicinity of the liquid can be absorbed and the harmful substances can be absorbed up to nearly a saturated state of the liquid. On the other hand, when the concentration of harmful substances is low, if a liquid with a big grain size is arranged sparsely, harmful substances cannot be absorbed up to nearly a saturated state of the liquid, and the liquid cannot be used efficiently. In response to the above, by arranging a liquid with a small grain size densely, even when the concentration of harmful substances is low, the harmful substances can be absorbed up to nearly a saturated state of the liquid, and the liquid can be used efficiently.

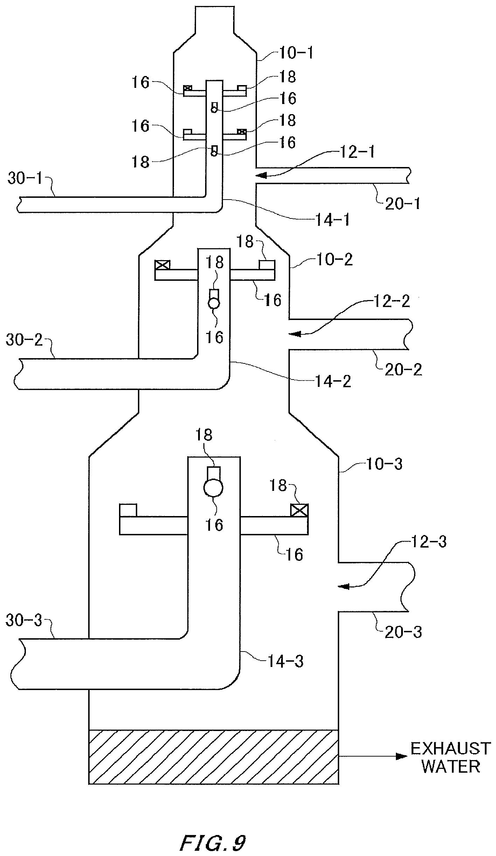

Fig. 9 is a diagram showing another configurational example of a reaction tower 10. The reaction tower 10 of the present example has a first part 10-1, a second part 10-2 and a third part 10-3. The first part 10-1 is provided farthest on the top side. The third part 10-3 is provided farthest on the bottom side. Also, the second part 10-2 is provided between the first part 10-1 and the third part 10-3. A cross-sectional area of the first part 10-1 in a horizontal direction is larger than any of the cross-sectional area of the second part 10-2 and the third part 10-3. Also, a cross-sectional area of the third part 10-3 is larger than a cross-sectional area of the second part 10-2.

In the first part 10-1, a top trunk tube 14-1 and an opening 12-1 are provided. Also, in the second part 10-2, an intermediate trunk tube 14-2 and an opening 12-2 are provided. Also, in the third part 10-3, a bottom trunk tube 14-3 and an opening 12-3 are provided. That is, a cross-sectional area of each part of the reaction tower 10 is smaller, as an area of a corresponding opening 12 is smaller. The respective openings 12 are provided on the bottom side of each part of the reaction tower 10.

The smaller an area of the opening 12 is, the smaller an introduced exhaust gas amount becomes. In this case, the larger a cross-sectional area of the reaction tower 10 is, an exhaust gas easily disperses, and an exhaust gas is hardly swirled. In response to the above, because each part of the reaction tower 10 of the present example has a cross-sectional area depending on an area of the opening 12, even when an exhaust gas amount is small, swirling of an exhaust gas can be maintained. For this reason, harmful substances included in the exhaust gas can be removed efficiently, and emitting a liquid from the top of the reaction tower 10 can be prevented. Branch pipes 16 in respective parts of the reaction tower 10 may have a length depending on a radius of the reaction tower 10 in the part.

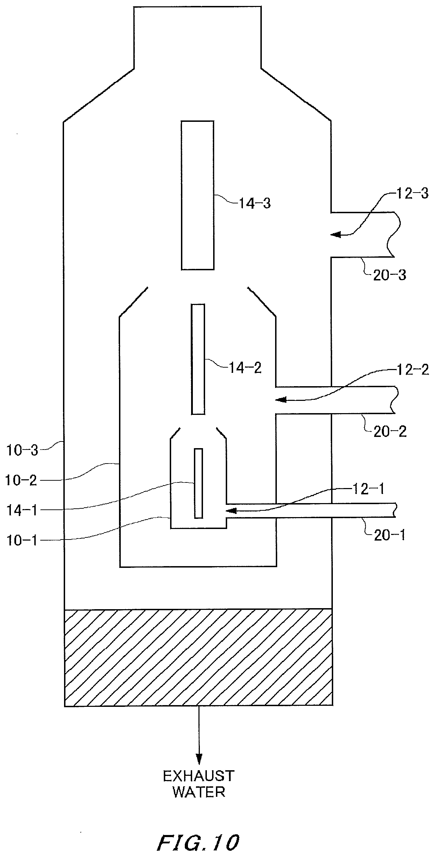

Fig. 10 is a diagram showing another configurational example of a reaction tower 10, a trunk tube 14 and an exhaust gas introducing pipe 20. In the present example, a branch pipe 16 is omitted, but a branch pipe 16 may be provided on the side surface of respective trunk tubes 14. The reaction tower 10 of the present example has a first part 10-1, a second part 10-2 and a third part 10-3.

The first part 10-1 is provided with an opening 12-1 on the side surface. The second part 10-2 is provided outside the first part 10-1, and is provided with an opening 12-2 on the side surface. The third part 10-3 is provided outside the second part 10-2, and is provided with an opening 12-3 on the side surface. That is, the third part 10-3 includes therein the first part 10-1 and the second part 10-2 therein. Also, the second part 10-2 includes the first part 10-1 therein.

Top ends of the first part 10-1 and the second part 10-2 are opened. That is, inner spaces of the third part 10-3, the second part 10-2 and the first part 10-1 are connected. A diameter of the third part 10-3 in a horizontal direction is larger than any of the diameter of the second part 10-2 and the first part 10-1. Also, the opening 12-3 is larger than any of the opening 12-2 and the opening 12-1. Also, a diameter of the second part 10-2 is larger than a diameter of the first part 10-1, the opening 12-2 is larger than the opening 12-1.

The second part 10-2 may be provided on the bottom side of the third part 10-3. The second part 10-2 may be provided in contact with the bottom surface of the third part 10-3. Also, the first part 10-1 may be provided on the bottom side of the second part 10-2. The first part 10-1 may be provided in contact with the bottom surface of the second part 10-2.

The opening 12-1 is formed on the bottom side of the first part 10-1. The opening 12-2 may be provided at almost the same height position as a tip of the first part 10-1 on the side surface of the second part 10-2. Also, the opening 12-3 may be provided at almost the same height position as a tip of the second part 10-2 on the side surface of the third part 10-3. Also, the respective openings 12 may be formed on the bottom side of respective parts of the reaction tower 10. Also, an exhaust gas introducing pipe 20-1 which connects to the opening 12-1 is provided penetrating the second part 10-2 and the third part 10-3. Also, an exhaust gas introducing pipe 20-2 which connects to the opening 12-2 is provided penetrating the third part 10-3.

According to the configuration of the present example, when a cross-sectional area of each part of the reaction tower 10 is smaller, an area of a corresponding opening 12 is smaller. Accordingly, even when an exhaust gas amount is small, swirling of an exhaust gas can be maintained.

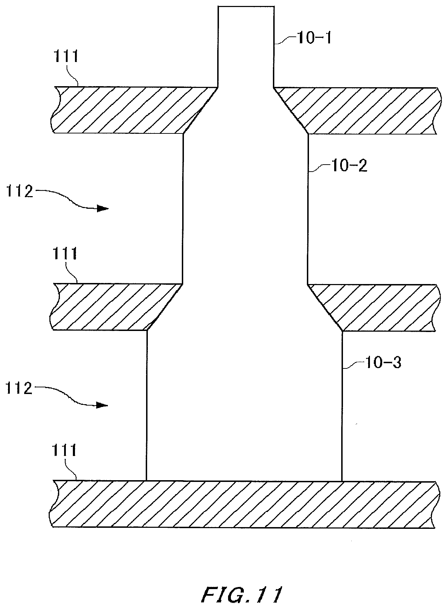

Fig. 11 is a diagram showing one example of a reaction tower 10 of an exhaust gas treatment apparatus 100 which is arranged in a ship. The exhaust gas treatment apparatus 100 of the present example treats an exhaust gas from a power source of a ship. The ship has a plurality of layers 112 in a height direction. Layers 112 are divided by floor boards 111. In the present example, a configuration of the reaction tower 10 is the same as the example shown in Fig. 9. Also, in the present example, an exhaust gas introducing pipe 20 and a liquid introducing pipe 30 are omitted, but may be connected to the reaction tower 10 like the example of Fig. 9.

The reaction tower 10 is provided over two or more layers 112 of the ship. On a floor board 111, an opening which the reaction tower 10 passes through is provided. A cross-sectional area of an inner space of the reaction tower 10 on a plane which is perpendicular to the height direction may be different for each layer 112 of the ship. Also, a contour of the reaction tower 10 varies depending on the cross-sectional area. In the present example, in the upper layers 112, a cross-sectional area and a contour of an inner space of the reaction tower 10 becomes smaller. By making the cross-sectional area of the reaction tower 10 smaller farther in the top side, a radius of rotation of an exhaust gas becomes smaller, and decrease in a rotation number can be prevented. Also, because the contour of the reaction tower 10 can be made smaller, it becomes easy to arrange on a ship in which an arrangement space is limited.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10 ...reaction tower, 12 ...opening, 14 ...trunk tube, 16 ...branch pipe, 18 ...injecting unit, 20 ...exhaust gas introducing pipe, 22 ...valve, 24 ...gas flow measuring unit, 26 ...opening controlling unit, 28 ...movable part, 29 ...main gas source closing off unit, 30 ...liquid introducing pipe, 32 ...valve, 34 ...liquid flow measuring unit, 36 ...pump, 38 ... flow controlling unit, 100 ...exhaust gas treatment apparatus, 110 ...exhaust gas source, 111 ...floor board, 112 ...layer

## Claims

1. An exhaust gas treatment apparatus (100) comprising:
a reaction tower (10) which has two or more openings (12) with different areas through which an exhaust gas is introduced, and
two or more exhaust gas introducing pipes (20) which are provided corresponding to the two or more openings (12) with different areas and carry the exhaust gas and which have valves (22) which select whether to introduce the exhaust gas into the reaction tower (10) or not, wherein the exhaust gas introducing pipes (20) are connected to the two or more openings (12) so that the introduced exhaust gas swirls inside the reaction tower (10),
the two or more openings (12) are provided respectively at different positions in a height direction which is a direction from a bottom side where the exhaust gas is introduced to a top side where the exhaust gas is emitted in the reaction tower (10),
an opening area of an opening (12) which is arranged on the bottom side of the reaction tower (10) is larger than an opening area of an opening (12) which is arranged on the top side of the reaction tower (10),
the reaction tower (10) has a cylindrical shape which extends in the height direction, a horizontal cross section which is perpendicular to the height direction of the reaction tower (10) is a circular shape, and the two or more exhaust gas introducing pipes (20) connect in the tangential direction of the horizontal cross section which is a circular shape,
wherein in the two or more openings (12), a total opening area which contributes to introducing the exhaust gas into the reaction tower (10) is variable, and wherein the exhaust gas treatment apparatus (100) further comprises an opening controlling unit (26) which controls the opening area depending on a flow rate of the exhaust gas which is introduced into the reaction tower (10) by controlling the valves (22),
the exhaust gas treatment apparatus (100) further comprises a flow controlling unit (38) which controls a supply amount of a liquid which is supplied to an inner part of the reaction tower (10) for treating the exhaust gas depending on the total opening area which contributes to introducing the exhaust gas into the reaction tower (10).

2. The exhaust gas treatment apparatus (100) according to Claim 1, wherein
the opening controlling unit (26) controls the opening area so that the opening area becomes smaller with decrease in a flow rate of the exhaust gas which is introduced into the reaction tower (10).

3. The exhaust gas treatment apparatus according to Claim 1 or 2, wherein
the two or more exhaust gas introducing pipes (20) are provided to overlap in a top surface view.

4. The exhaust gas treatment apparatus (100) according to any one of Claim 1 to 3, wherein
a cross-sectional area of the top side of the reaction tower (10) is smaller than a cross-sectional area of the bottom side.

5. The exhaust gas treatment apparatus (100) according to any one of Claim 1 to 4, wherein
the two or more exhaust gas introducing pipes (20) are collected to a common exhaust gas introducing pipe before being introduced into the reaction tower (10), branched again on a downstream side and connected to the corresponding openings (12),
the exhaust gas treatment apparatus (100) further comprises a main gas source closing off unit (29) which is provided on an upstream side of the common exhaust gas introducing pipe in at least one exhaust gas introducing pipe (20) of the two or more exhaust gas introducing pipes (20), and switches whether to connect the exhaust gas introducing pipe (20) to the common exhaust gas introducing pipe or not.

6. The exhaust gas treatment apparatus (100) according to any one of Claims 1 to 5, wherein
at least one of the openings (12) has a variable opening area.

7. The exhaust gas treatment apparatus (100) according to any one of Claims 1 to 6, wherein
at least one exhaust gas introducing pipe (20) has a variable cross-sectional area in the vicinity of an opening (12).

8. The exhaust gas treatment apparatus according to any one of Claims 1 to 7, further comprising
a trunk tube (14) in which a liquid passes in a height direction of the reaction tower (10) inside the reaction tower (10), and
a plurality of liquid introducing pipes (30) which supply a liquid to the trunk tube (14) at different positions in a height direction,
wherein the flow controlling unit (38) controls a supply amount of a liquid to the reaction tower (10) by selecting the plurality of liquid introducing pipes (30).

9. The exhaust gas treatment apparatus (100) according to any of Claims 1 to 8, wherein
the flow controlling unit (38) controls a supply amount of the liquid so that the supply amount of the liquid which is supplied inside the reaction tower (10) becomes smaller with decrease in the opening area.

10. The exhaust gas treatment apparatus (100) according to any one of Claims 1 to 9, wherein
the reaction tower (10) has
a first part (10-1) which has an opening (12-1) through which the exhaust gas is introduced, and
a second part (10-2) which is provided outside the first part (10-1), has an opening (12-2) through which the exhaust gas is introduced, and has a larger diameter than the first part (10-1), wherein
a space to which the exhaust gas is introduced in the first part (10-1) and the second part (10-2) is connected,
the opening (12-1) which is provided on the first part (10-1) is smaller than the opening (12-2) which is provided on the second part (10-2).

## Patentansprüche

1. Abgasbehandlungsvorrichtung (100), umfassend:
einen Reaktionsturm (10), der zwei oder mehr Öffnungen (12) mit unterschiedlichen Flächen aufweist, durch die ein Abgas eingeleitet wird, und
zwei oder mehr Abgaseinleitungsrohre (20), die entsprechend den zwei oder mehr Öffnungen (12) mit unterschiedlichen Flächen vorgesehen sind und das Abgas befördern und die Ventile (22) aufweisen, die auswählen, ob das Abgas in den Reaktionsturm (10) eingeleitet werden soll oder nicht, wobei die Abgaseinleitungsrohre (20) mit den zwei oder mehr Öffnungen (12) verbunden sind, sodass das eingeleitete Abgas innerhalb des Reaktionsturms (10) verwirbelt wird,
wobei die zwei oder mehr Öffnungen (12) jeweils an unterschiedlichen Positionen in einer Höhenrichtung vorgesehen sind, die eine Richtung von einer Unterseite ist, an der das Abgas eingeleitet wird, zu einer Oberseite, an der das Abgas in den Reaktionsturm (10) ausgegeben wird,
eine Öffnungsfläche einer Öffnung (12), die an der Unterseite des Reaktionsturms (10) angeordnet ist, größer ist als eine Öffnungsfläche einer Öffnung (12), die an der Oberseite des Reaktionsturms (10) angeordnet ist,
der Reaktionsturm (10) eine zylindrische Form aufweist, die sich in der Höhenrichtung erstreckt, ein horizontaler Querschnitt, der senkrecht zur Höhenrichtung des Reaktionsturms (10) ist, eine Kreisform aufweist und sich die zwei oder mehr Abgaseinleitungsrohre (20) in der tangentialen Richtung des horizontalen Querschnitts verbinden, der eine Kreisform aufweist,
wobei in den zwei oder mehr Öffnungen (12) eine Gesamtöffnungsfläche, die zum Einleiten des Abgases in den Reaktionsturm (10) beiträgt, variabel ist, und wobei die Abgasbehandlungsvorrichtung (100) ferner eine Öffnungssteuereinheit (26) umfasst, welche die Öffnungsfläche in Abhängigkeit von einer Strömungsrate des Abgases, das in den Reaktionsturm (10) eingeleitet wird, durch Steuern der Ventile (22) steuert,
die Abgasbehandlungsvorrichtung (100) ferner eine Strömungssteuereinheit (38) umfasst, die eine Zufuhrmenge einer Flüssigkeit steuert, die zur Behandlung des Abgases in Abhängigkeit von der Gesamtöffnungsfläche, die zum Einleiten des Abgases in den Reaktionsturm (10) beiträgt, einem inneren Teil des Reaktionsturms (10) zugeführt wird.

2. Abgasbehandlungsvorrichtung (100) nach Anspruch 1, wobei
die Öffnungssteuereinheit (26) die Öffnungsfläche derart steuert, dass die Öffnungsfläche mit Abnahme einer Strömungsrate des Abgases, das in den Reaktionsturm (10) eingeleitet wird, kleiner wird.

3. Abgasbehandlungsvorrichtung nach Anspruch 1 oder 2, wobei
die zwei oder mehr Abgaseinleitungsrohre (20) derart vorgesehen sind, dass sie sich in einer Draufsicht überlappen.

4. Abgasbehandlungsvorrichtung (100) nach einem der Ansprüche 1 bis 3, wobei
eine Querschnittsfläche der Oberseite des Reaktionsturms (10) kleiner ist als eine Querschnittsfläche der Unterseite.

5. Abgasbehandlungsvorrichtung (100) nach einem der Ansprüche 1 bis 4, wobei
die zwei oder mehr Abgaseinleitungsrohre (20) zu einem gemeinsamen Abgaseinleitungsrohr zusammengefasst werden, bevor diese in den Reaktionsturm (10) eingeführt werden, und auf einer stromabwärtigen Seite wieder verzweigt und mit den entsprechenden Öffnungen (12) verbunden werden,
die Abgasbehandlungsvorrichtung (100) ferner eine Hauptgasquellenabsperreinheit (29) umfasst, die an einer stromaufwärtigen Seite des gemeinsamen Abgaseinleitungsrohrs in mindestens einem Abgaseinleitungsrohr (20) der zwei oder mehr Abgaseinleitungsrohre (20) vorgesehen ist, und dazwischen wechselt, ob das Abgaseinleitungsrohr (20) mit dem gemeinsamen Abgaseinleitungsrohr verbunden werden soll oder nicht.

6. Abgasbehandlungsvorrichtung (100) nach einem der Ansprüche 1 bis 5, wobei
mindestens eine der Öffnungen (12) eine variable Öffnungsfläche aufweist.

7. Abgasbehandlungsvorrichtung (100) nach einem der Ansprüche 1 bis 6, wobei
mindestens ein Abgaseinleitungsrohr (20) eine variable Querschnittsfläche in der Nähe einer Öffnung (12) aufweist.

8. Abgasbehandlungsvorrichtung nach einem der Ansprüche 1 bis 7, ferner umfassend
ein Schachtrohr (14), in dem eine Flüssigkeit in einer Höhenrichtung des Reaktionsturms (10) innerhalb des Reaktionsturms (10) strömt, und
mehrere Flüssigkeitseinleitungsrohre (30), die dem Schachtrohr (14) an verschiedenen Positionen in einer Höhenrichtung eine Flüssigkeit zuführen,
wobei die Strömungssteuereinheit (38) eine Zufuhrmenge einer Flüssigkeit zum Reaktionsturm (10) durch Auswählen der mehreren Flüssigkeitseinleitungsrohre (30) steuert.

9. Abgasbehandlungsvorrichtung (100) nach einem der Ansprüche 1 bis 8, wobei
die Strömungssteuereinheit (38) eine Zufuhrmenge der Flüssigkeit derart steuert, dass die Zufuhrmenge der Flüssigkeit, die in den Reaktionsturm (10) zugeführt wird, mit Abnahme in der Öffnungsfläche kleiner wird.

10. Abgasbehandlungsvorrichtung (100) nach einem der Ansprüche 1 bis 9, wobei
der Reaktionsturm (10)
einen ersten Teil (10-1) aufweist, der eine Öffnung (12-1) aufweist, durch die das Abgas eingeleitet wird, und
einen zweiten Teil (10-2), der außerhalb des ersten Teils (10-1) vorgesehen ist und eine Öffnung (12-2) aufweist, durch die das Abgas eingeleitet wird, der einen größeren Durchmesser als der erste Teil (10-1) aufweist, wobei
ein Raum, in den das Abgas in dem ersten Teil (10-1) und dem zweiten Teil (10-2) eingeleitet wird, verbunden ist,
die Öffnung (12-1), die an dem ersten Teil (10-1) vorgesehen ist, kleiner ist als die Öffnung (12-2), die an dem zweiten Teil (10-2) vorgesehen ist.

## Revendications

1. Appareil de traitement de gaz d'échappement (100) comprenant:
une colonne de réaction (10) qui a deux ou davantage d'ouvertures (12) avec différentes aires à travers lesquelles un gaz d'échappement est introduit, et
deux ou davantage de tuyaux d'introduction de gaz d'échappement (20) qui sont fournis de manière correspondante aux deux ou davantage d'ouvertures (12) avec différentes aires et transportent le gaz d'échappement et qui ont des soupapes (22) qui sélectionnent s'il convient ou non d'introduire le gaz d'échappement dans la colonne de réaction (10), dans lequel les tuyaux d'introduction de gaz d'échappement (20) sont raccordés aux deux ou davantage d'ouvertures (12) de manière à ce que le gaz d'échappement introduit tourbillonne à l'intérieur de la colonne de réaction (10),
les deux ou davantage d'ouvertures (12) sont fournies respectivement dans différentes positions dans une direction en hauteur qui est une direction depuis un côté inférieur où le gaz d'échappement est introduit vers un côté supérieur où le gaz d'échappement est émis dans la colonne de réaction (10),
une aire d'ouverture d'une ouverture (12) qui est ménagée sur le côté inférieur de la colonne de réaction (10) est supérieure à une aire d'ouverture d'une ouverture (12) qui est ménagée sur le côté supérieur de la colonne de réaction (10),
la colonne de réaction (10) a une forme cylindrique qui s'étend dans la direction en hauteur, une section transversale horizontale qui est perpendiculaire à la direction en hauteur de la colonne de réaction (10) est d'une forme circulaire, et les deux ou davantage de tuyaux d'introduction de gaz d'échappement (20) se raccordent dans la direction tangentielle de la section transversale horizontale qui est de forme circulaire,
dans lequel, dans les deux ou davantage d'ouvertures (12), une aire d'ouverture totale qui contribue à l'introduction du gaz d'échappement dans la colonne de réaction (10) est variable, et dans lequel l'appareil de traitement de gaz d'échappement (100) comprend en outre une unité de contrôle d'ouverture (26) qui contrôle l'aire d'ouverture en fonction d'un débit du gaz d'échappement qui est introduit dans la colonne de réaction (10) en contrôlant les soupapes (22),
l'appareil de traitement de gaz d'échappement (100) comprend en outre une unité de contrôle d'écoulement (38) qui contrôle une quantité d'alimentation d'un liquide qui alimente une partie intérieure de la colonne de réaction (10) pour traiter le gaz d'échappement en fonction de l'aire d'ouverture totale qui contribue à l'introduction du gaz d'échappement dans la colonne de réaction (10).

2. Appareil de traitement de gaz d'échappement (100) selon la revendication 1, dans lequel
l'unité de contrôle d'ouverture (26) contrôle l'aire d'ouverture de manière à ce que l'aire d'ouverture devienne plus petite avec une diminution d'un débit du gaz d'échappement introduit dans la colonne de réaction (10) .

3. Appareil de traitement de gaz d'échappement selon la revendication 1 ou 2, dans lequel
les deux ou davantage de tuyaux d'introduction de gaz d'échappement (20) sont fournis de manière à se chevaucher en vue de surface de dessus.

4. Appareil de traitement de gaz d'échappement (100) selon l'une quelconque des revendications 1 à 3, dans lequel
une aire de section transversale du côté supérieur de la colonne de réaction (10) est inférieure à une aire de section transversale du côté inférieur.

5. Appareil de traitement de gaz d'échappement (100) selon l'une quelconque des revendications 1 à 4, dans lequel
les deux ou davantage de tuyaux d'introduction de gaz d'échappement (20) sont rassemblés en un tuyau d'introduction de gaz d'échappement commun avant d'être introduits dans la colonne de réaction (10), se ramifient de nouveau d'un côté aval, et sont raccordés aux ouvertures correspondantes (12),
l'appareil de traitement de gaz d'échappement (100) comprend en outre une unité de fermeture de source de gaz principale (29) qui est fournie d'un côté amont du tuyau d'introduction de gaz d'échappement commun dans au moins un tuyau d'introduction de gaz d'échappement (20) des deux ou davantage de tuyaux d'introduction de gaz d'échappement (20), et commute selon qu'il convient de raccorder le tuyau d'introduction de gaz d'échappement (20) au tuyau d'introduction de gaz d'échappement commun ou non.

6. Appareil de traitement de gaz d'échappement (100) selon l'une quelconque des revendications 1 à 5, dans lequel au moins l'une des ouvertures (12) a une aire d'ouverture variable.

7. Appareil de traitement de gaz d'échappement (100) selon l'une quelconque des revendications 1 à 6, dans lequel
au moins un tuyau d'introduction de gaz d'échappement (20) a une aire de section transversale variable à proximité d'une ouverture (12).

8. Appareil de traitement de gaz d'échappement selon l'une quelconque des revendications 1 à 7, comprenant en outre
un tube formant tronc (14) dans lequel passe un liquide dans une direction en hauteur de la colonne de réaction (10) à l'intérieur de la colonne de réaction (10), et
une pluralité de tuyaux d'introduction de liquide (30) qui alimentent avec un liquide le tube formant tronc (14) dans différentes positions dans une direction en hauteur,
dans lequel l'unité de contrôle d'écoulement (38) contrôle une quantité d'alimentation en liquide de la colonne de réaction (10) en sélectionnant la pluralité des tuyaux d'introduction de liquide (30).

9. Appareil de traitement de gaz d'échappement (100) selon l'une quelconque des revendications 1 à 8, dans lequel
l'unité de contrôle d'écoulement (38) contrôle une quantité d'alimentation avec le liquide de manière à ce que la quantité d'alimentation avec le liquide qui alimente l'intérieur de la colonne de réaction (10) devient inférieure avec la diminution de l'aire d'ouverture.

10. Appareil de traitement de gaz d'échappement (100) selon l'une quelconque des revendications 1 à 9, dans lequel
la colonne de réaction (10) a
une première partie (10-1) qui a une ouverture (12-1) à travers laquelle le gaz d'échappement est introduit, et
une deuxième partie (10-2) qui est fournie à l'extérieur de la première partie (10-1), a une ouverture (12-2) à travers laquelle le gaz d'échappement est introduit, et a un diamètre plus grand que la première partie (10-1), dans lequel
un espace dans lequel le gaz d'échappement est introduit dans la première partie (10-1) et la deuxième partie (10-2) est relié,
l'ouverture (12-1) fournie au niveau de la première partie (10-1) est plus petite que l'ouverture (12-2) fournie au niveau de la deuxième partie (10-2).
